# EUROPEAN PATENT APPLICATION

(11) **EP 4 589 268 A1**
(43) Date of publication of application: **23.07.2025**
(21) Application number: 25151471.7
(22) Date of filing: 13.01.2025
(51) Int. Cl.: G01G 19/393

(54) **COMBINATION WEIGHING APPARATUS**

(30) Priority: 22.01.2024 JP 2024007670
(71) Applicant: Ishida Co., Ltd., Kyoto-shi Kyoto 606-8392 (JP)
(72) Inventor: MIYAMOTO, Hideshi, Ritto-shi, Shiga, 520-3026 (JP); TSURU, Tomohiro, Ritto-shi, Shiga, 520-3026 (JP)
(74) Representative: Gill Jennings & Every LLP

(57) **Abstract**

A combination weighing apparatus (1) according to an embodiment includes: a distribution unit (2) that radially distributes articles (M) supplied from an external apparatus (100); a plurality of radiation feeders (3₁, 3₂, 3ₙ) that conveys the articles (M) conveyed from the distribution unit (2) in a direction away from the distribution unit (2); a camera (20) that captures a region where the articles (M) are conveyed on the radiation feeders (3₁, 3₂, 3ₙ); and a controller (4) that controls supply of the articles (M) by the external apparatus (100) on a basis of an image captured by the camera (20).

## Description

### TECHNICAL FIELD

The present invention relates to a combination weighing apparatus.

### BACKGROUND ART

Conventionally known techniques regarding a combination weighing apparatus include stopping rotation of an eccentric distribution table toward a pool hopper running out of articles (see, for example, JP 2015-059796 A, JP 2014-098670 A, JP 2011-145245 A, and JP 2010-175408 A) .

The known techniques regarding a combination weighing apparatus also include detecting an article stagnation region on a radiation feeder with a camera and driving and controlling the radiation feeder having the detected stagnation region (see, for example, JP 2013-250143 A).

### SUMMARY OF INVENTION

According to the conventional art, however, the supply of articles to the distribution table is controlled based on an output from a load sensor that detects the mass of articles on the distribution table. Therefore, ven when an article stagnates on the radiation feeder, articles are supplied to the distribution table as long as the distribution table becomes free from articles.

Therefore, for example, in a case of articles such as chicken thighs that are supplied to the distribution table and immediately flow to the radiation feeder, there is a problem that the articles tend to be excessively supplied to the radiation feeder.

The present invention has been made in view of the above problems, and an object of the present invention is to provide a combination weighing apparatus capable of reducing oversupply and undersupply of articles.

A combination weighing apparatus according to an embodiment is summarized as including: a distribution unit that radially distributes articles supplied from an external apparatus; a plurality of radiation feeders that conveys the articles conveyed from the distribution unit in a direction away from the distribution unit; a camera that captures a region where the articles are conveyed on the radiation feeders; and a controller that controls supply of the articles by the external apparatus on a basis of an image captured by the camera.

According to the present invention, it is possible to provide a combination weighing apparatus capable of reducing oversupply and undersupply of articles.

### BRIEF DESCRIPTION OF THE DRAWINGS

FIG. 1 is a diagram for describing an example of an overall configuration of a combination weighing apparatus according to an embodiment; and
FIG. 2 is a diagram for describing an example of regions for conveying articles on radiation feeders of the combination weighing apparatus according to the embodiment.

### DESCRIPTION OF EMBODIMENTS

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

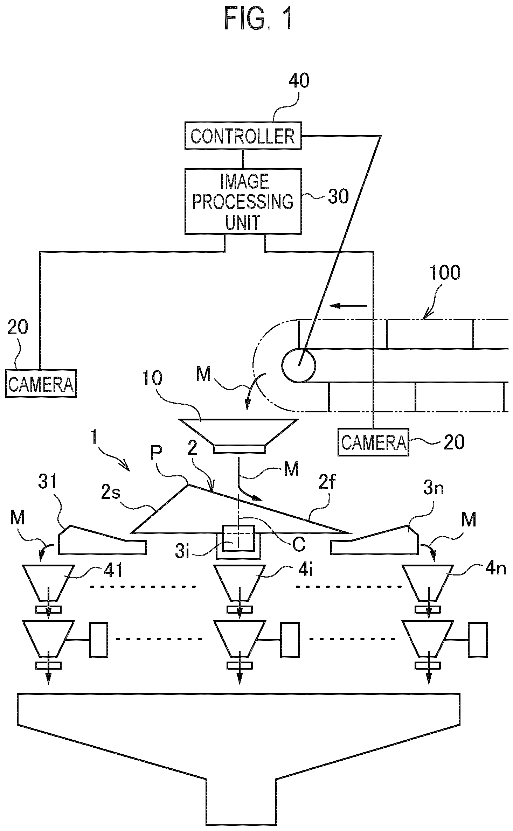

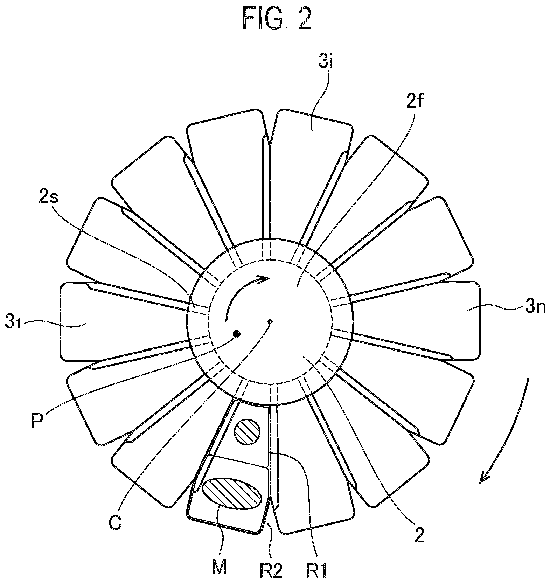

Hereinafter, a combination weighing apparatus 1 according to a first embodiment of the present invention will be described with reference to FIGS. 1 and 2. FIG. 1 is a diagram for describing an example of an overall configuration of the combination weighing apparatus 1 according to the first embodiment, and FIG. 2 is a diagram for describing an example of regions R1 and R2 occupied by articles M on radiation feeders 3₁, 3ᵢ, and 3ₙ of the combination weighing apparatus 1 according to the first embodiment.

As illustrated in FIG. 1, the combination weighing apparatus 1 according to the present embodiment includes a distribution table 2, the plurality of radiation feeders 3 (3₁, 3ᵢ, and 3ₙ), a plurality of pool hoppers 4₁, 4ᵢ, and 4ₙ, a camera 20, an image processing unit 30, and a controller 40.

The distribution table 2 constitutes a distribution unit that radially distributes articles M supplied from an external apparatus 100. The distribution table 2 may be a conical table 2 configured to vibrate or a conical distribution table 2 configured to rotate in a horizontal plane.

The radiation feeders 3 (3₁, 3ᵢ, and 3ₙ) convey the articles M conveyed from the distribution table 2 in a direction away from the distribution table 2. As illustrated in FIGS. 1 and 2, the radiation feeders 3₁, 3ᵢ, and 3ₙ are disposed substantially circumferentially below the distribution table 2 and around the distribution table 2. Furthermore, the radiation feeders 3₁, 3ᵢ, and 3ₙ each may be a vibration feeder that advances the articles M on the trough with an electromagnetic vibrator and a parallel plate spring, or a belt conveyor.

The pool hoppers 4₁, 4ᵢ, and 4ₙ are provided corresponding to the plurality of radiation feeders 3₁, 3ᵢ, and 3ₙ, respectively, and receive and store the articles M supplied from the plurality of radiation feeders 3₁, 3ᵢ, and 3ₙ.

As illustrated in FIG. 2, the camera 20 images the regions R1 and R2 where the articles M are conveyed on the radiation feeders 3₁, 3ᵢ, and 3ₙ. Note that one or a plurality of cameras 20 may be provided. For example, two cameras 20 may complement each other to image the regions R1 and R2 where the articles M are conveyed on all of the radiation feeders 3₁, 3ᵢ, and 3ₙ.

Here, the region R1 is a region adjacent to the distribution table 2, and the region R2 is a downstream region next to the region R1.

The controller 40 controls the supply of the articles M by the external apparatus 100 on the basis of an image captured by the camera 20.

The image processing unit 30 acquires a first proportion indicating the proportion of the area occupied by the articles M in the area of the region R1 on the basis of the image captured by the camera 20.

The controller 40 may instruct the external apparatus 100 to stop the supply of the articles M in a case where the first proportion is greater than or equal to a first predetermined value, and may instruct the external apparatus 100 to start the supply of the articles M in a case where the first proportion is less than a second predetermined value.

Here, the first predetermined value and the second predetermined value may be the same value or different values.

According to such a configuration, since the first proportion is an index of the stagnation situation of the articles M in the region R1 adjacent to the distribution table 2, it is possible to effectively reduce the oversupply and undersupply of the articles M by controlling the supply of the articles M by the external apparatus 100 according to the stagnation situation.

The controller 40 may control the supply of the articles M by the external apparatus 100 on the basis of the mass of the articles M loaded on a load cell supporting the distribution table 2, in addition to the captured image described above. According to such a configuration, it is possible to control the supply of the articles M by the external apparatus 100 based on the mass of the articles M on the distribution table 2 in consideration of the stagnation situation of the articles M on the radiation feeders 3, and thus, it is possible to reduce the oversupply and undersupply of the articles M.

In addition, the controller 40 may increase the conveyance power of the distribution table 2 in a case where the above-described first proportion is less than a third predetermined value.

For example, when the first proportion is less than the third predetermined value, the controller 40 may drive the distribution table 2 with a predetermined vibration intensity, or may forcibly discharge the articles M on the radiation feeders 3 by accelerating and decelerating the rotation of the distribution table 2.

According to such a configuration, the articles M can be conveyed from the distribution table 2 to the radiation feeder 3 having a small amount of articles M in the region R1 adjacent to the distribution table 2.

Furthermore, for example, the distribution table 2 may be configured to rotate in a horizontal plane and have an outer shape of an eccentric cone having a steep slope 2s and a gentle slope 2f, as illustrated in FIG. 1.

Specifically, as illustrated in FIGS. 1 and 2, the distribution table 2 has an eccentric vertex P and thus has a rotation center C set on the gentle slope 2f. Therefore, in a state where the gentle slope 2f is directed toward the radiation feeder 3 having less articles M, the articles M supplied to the distribution table 2 are conveyed onto the target radiation feeder 3ᵢ, 3ᵢ, or 3ₙ by sliding on the gentle slope 2f.

In such a case, the controller 40 selects the radiation feeder 3 the above-described first proportion of which is the smallest, and instructs the external apparatus 100 to stop the supply of the articles M when the first proportion of the selected radiation feeder 3 is greater than or equal to a fourth predetermined value.

Here, when the smallest first proportion of the selected radiation feeder 3 is greater than or equal to the fourth predetermined value, it is assumed that the articles M discharged from the distribution table 2 stagnate on all the radiation feeders 3₁, 3ᵢ, and 3ₙ. Therefore, according to such a configuration, the supply of the articles M by the external apparatus 100 can be stopped even when there is no article M on the distribution table 2, so that the articles M on the radiation feeders 3 can be moved to the downstream regions R2 by the radiation feeders 3 selectively driven in the combination weighing apparatus 1.

In addition, the image processing unit 30 may acquire a second proportion indicating the proportion of the area occupied by the articles M in the area of the region R2 described above.

Here, in a case where the radiation feeder 3 having the smallest total value of the first proportion and the second proportion is specifiable, the controller 40 may control the rotation direction and the stop position of the distribution table 2 to cause the gentle slope 2f to be directed to the radiation feeder 3 having the smallest total value.

According to such a configuration, the articles M charged into the distribution table 2 from the external apparatus 100 can be supplied toward the radiation feeder 3 which seems to have the smallest number of articles M.

According to the present embodiment, even when there is no article M on the distribution table 2, the supply of the articles from the external apparatus 100 to the distribution table 2 can be temporarily stopped as long as the articles M stagnate in the radiation feeders 3₁, 3ᵢ, and 3ₙ. Therefore, the articles M are not excessively supplied to the radiation feeders 3 in which the articles M stagnate.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### REFERENCE SIGNS LIST

1 Combination weighing apparatus
2 Distribution table (Distribution unit)
2s Steep slope
2f Gentle slope
31, 3₂, 3ₙ Radiation feeder
41, 4₂, 4ₙ Pool hopper
20 Camera
30 Image processing unit
40 Controller
100 External apparatus
M Article

## Claims

1. A combination weighing apparatus comprising:
a distribution unit that radially distributes articles supplied from an external apparatus;
a plurality of radiation feeders that conveys the articles conveyed from the distribution unit in a direction away from the distribution unit;
a camera that captures a region where the articles are conveyed on the radiation feeders; and
a controller that controls supply of the articles by the external apparatus on a basis of an image captured by the camera.

2. The combination weighing apparatus according to claim 1, further comprising:
an image processing unit that acquires a first proportion indicating a proportion of an area occupied by an article in an area of a region adjacent to the distribution unit out of the region where the articles are conveyed on the radiation feeders on the basis of the captured image, wherein
the controller
instructs the external apparatus to stop the supply of the articles in a case where the first proportion is greater than or equal to a first predetermined value, and
instructs the external apparatus to start the supply of the articles in a case where the first proportion is less than a second predetermined value.

3. The combination weighing apparatus according to claim 1 or 2, wherein
the controller controls the supply of the articles by the external apparatus on a basis of the captured image and a mass of an article on the distribution unit.

4. The combination weighing apparatus according to any of the preceding claims, wherein
the controller increases a conveyance power of the distribution unit when the first proportion is less than a third predetermined value.

5. The combination weighing apparatus according to any of the preceding claims, wherein
the distribution unit rotates in a horizontal plane and has an outer shape of an eccentric cone having a steep slope and a gentle slope, and
in a case where the first proportion of a radiation feeder out of the radiation feeders that has a smallest first proportion is larger than or equal to a fourth predetermined value, the controller instructs the external apparatus to stop the supply of the articles, and controls a rotation direction and a stop position of the distribution unit to cause the gentle slope to be directed to the radiation feeder that has the smallest first proportion.

6. The combination weighing apparatus according to claim 5, wherein
the image processing unit acquires a second proportion indicating a proportion of an area occupied by an article in an area of a downstream region next to the region adjacent to the distribution unit, and
in a case where a radiation feeder having a smallest total value of the first proportion and the second proportion is specifiable, the controller controls the rotation direction and the stop position of the distribution unit to cause the gentle slope to be directed to the radiation feeder having the smallest total value.
